# EUROPEAN PATENT SPECIFICATION

(11) **EP 3 043 508 B1**
(45) Date of publication and mention of the grant of the patent: **26.06.2019**
(21) Application number: 15305017.4
(22) Date of filing: 09.01.2015
(51) Int. Cl.: H04L 9/08

(54) **Hybrid classical quantum cryptography**
Hybride Klassische quantenkryptografie
Cryptographie quantique classique hybride

(43) Date of publication of application: 13.07.2016
(73) Proprietor: Institut Mines Telecom, 75014 Paris (FR)
(72) Inventor: Alleaume, Romain, 75012 PARIS (FR)
(74) Representative: Lucas, Laurent Jacques

(56) References cited:
- "Quantum Safe Cryptography and Security; An introduction, benefits, enablers and challenges", Quantum Safe Cryptography V1.0.0, 6 October 2014 (2014-10-06), pages 1-49, XP055146959, ISBN: 979-1-09-262003-0 Retrieved from the Internet: URL:http://docbox.etsi.org/Workshop/2014/2 01410_CRYPTO/Quantum_Safe_Whitepaper_1_0_0 .pdf [retrieved on 2014-10-15]
- VALERIO SCARANI ET AL: "The Security of Practical Quantum Key Distribution", ARXIV.ORG, CORNELL UNIVERSITY LIBRARY, 201 OLIN LIBRARY CORNELL UNIVERSITY ITHACA, NY 14853, 28 February 2008 (2008-02-28), XP080402341,
- ROMAIN ALLEAUME ET AL: "SECOQC White Paper on Quantum Key Distribution and Cryptography", ARXIV.ORG, CORNELL UNIVERSITY LIBRARY, 201 OLIN LIBRARY CORNELL UNIVERSITY ITHACA, NY 14853, 23 January 2007 (2007-01-23), XP080269269,

## Description

### Technical Field

The invention relates to the field of quantum cryptography and more particularly to systems and methods of securely communicating a message between distant parties.

### Background

The creation and the distribution of cryptographic keys is a prerequisite for encrypted communications. Quantum key distribution (QKD) can be used to produce and distribute a cryptographic key, but not to transmit any message data.

QKD presents limitations. As of today, the distance over which quantum key distribution has been demonstrated is limited to a few hundreds of kilometers over optical fibers. QKD is not compatible with optical amplifiers. QKD presents other limitations.

The patent document WO2005046114, published in 2005 and entitled "*Coherent-states based quantum data-encryption through optically-amplified WDM communication networks*" discloses a quantum cryptographic protocol which uses two-mode coherent states that is optically amplifiable, resulting in a polarization independent system that is compatible with the existing WDM infrastructure and which provides secure data encryption suitable for wavelength division multiplexing networks through an in-line amplified line. This approach presents limitations.

Document XP055146959: Quantum Safe Cryptography and Security; An introduction, benefits, enablers and challenges from the ETSI ISBN 979-10-92620-03-0 ; ISBN 092620035 is a white paper in quantum crpytography and discloses QKD protocols and their implementations.

Document XP080402341 The Security of Practical Quantum Key Distribution arXiv.org discloses various protocols and elements of the QKD systems.

XP080269269 SECOQC White Paper on Quantum Key Distribution and Cryptography arXiv.org discloses a practical implementation of QKD in networks.

There is a need for advanced methods and systems for securely communicating a classical message M between distant parties A and B.

The invention is defined by the independent claims. Preferred embodiments are set out in the dependent claims.

### Summary

There is disclosed a method of communicating a long-term-secure classical message M between distant parties Alice (A) and Bob (B) by sharing a short-term-secure classical key K between A and B and by using a public quantum channel and a classical authenticated channel. In an embodiment, a classical message is long-term-secure if the accessible information of any eavesdropper Eve (E) about the message can be upper bounded by a quantity which can be chosen arbitrary close to zero and if said bound remains valid at all time; and a classical message is short-term-secure during a time duration tau if the accessible information of any eavesdropper E about the message can be upper bounded by a quantity which can be chosen arbitrary close to zero and if this bound is valid during a time interval of duration at least tau. Described developments comprise steps of sharing a short-term-secure key K between A and B over the classical authenticated channel; encoding the classical message M at A into a quantum state, using the short-term-secure key K and sending the quantum state to B over the quantum channel; decoding reliably the message M at B, using K and the quantum state received at the output of the quantum channel. Further embodiments comprise the use of computationally-secure public-key and/or symmetric-key encryption, the use of an error correction code, the use of phase or amplitude product of coherent states at input, the use of individual (adaptative or non-adaptative) coherent receivers. System and software aspects are described.

Advantageously, the disclosed quantum cryptographic protocol - mixing classical and quantum cryptography - offers a comprehensive security model under which one can explicitely define the achievable performance of the protocol on a given channel, against quantum a attacker with given resources and attack strategy.

Advantageously in some embodiments, compared to computationally-secure encryption, A and B, using a quantum channel and a short-term secure key K, can achieve long-term security and even composable information-theoretic security if the eavesdropper cannot store quantum information coherently during a time larger than the time tau during which the exchanged key K is short-term secure.

Advantageously in some embodiments, compared to QKD where a secure random key is shared, A and B can securely share a deterministic message M.

Advantageously, embodiments of the invention enable an «extended security»: the use of an error correction code during the quantum encoding allows to reach increased performance compared to QKD: larger tolerable channel losses, higher tolerable channel error rate.

Advantageously in some embodiments, in particular when compared to QKD, A and B do not *even* need to perform measurements in order to upper bound the information captured by E.

Advantageously in some embodiments, in particular when compared to QKD, the method is compatible with optical channels that contain optical amplifiers and with WDM optical networks.

In some embodiments, the disclosed methods and systems advantageously enable some *controllability.* For example parameters such as (n, alpha) associated to some embodiments of the method can be tuned to optimize the performance (e.g. achievable communication rate R given a correctness parameter epsilon) on a given channel (characterized by loss and error rate).

Advantageously, embodiments of the invention can be implemented without excessive efforts and costs, with minimal hardware changes to existing telecom components and systems (for example by using phase modulation of coherent states and homodyne detection which are now widely used in long-distance coherent classical communications).

Advantageously, embodiments of the invention which allow to perform optimal measurements and to reach or approach the capacity for classical communications over the quantum channel between A and B can be implemented with practical existing receivers, i.e. can be reduced to practice with current technology.

In some embodiments, the invention enables a "low-cost" QKD: the disclosed technology can be implemented directly with existing coherent communication emitters, phase modulators and receivers.

Advantageously, embodiments of the invention enable security of "data at flight" (e.g. data flows, during data transport) with applications to security of "data at rest" (e.g. key management for data storage in data centers, cloud computing data warehouses, etc).

Advantageously, some embodiments of the invention can be implemented in fiber optics networks, including WDM optical networks and networks containing optical amplifiers, or in satellite networks. Applications range from military purposes to general and domestic ones (e.g. banks, governments, voting machines, cryptographic currencies, e-commerce, etc).

### Brief description of drawings

Embodiments of the present invention will now be described by way of example with reference to the accompanying drawings in which like references denote similar elements, and in which:
Figure 1 shows examples of steps of an embodiment of the method according to the invention;
Figure 2 illustrates some aspects of an exemplary system according to the invention.

### Detailed description

Some technical terms are now defined.

The "Accessible information" or lacc(M;rho) is defined by the maximum classical mutual information (maximization over all possible local measurements on quantum state rho) that can be learned from the quantum state rho about the classical message M.

A classical message is long-term-secure if the accessible information of any eavesdropper E about the message can be upper bounded by a quantity that can be chosen arbitrary close to zero and if this bound remains valid at all time.

A classical message is short-term-secure during a time duration tau if the accessible information of any eavesdropper E about the message can be upper bounded by a quantity that can be chosen arbitrary close to zero and if this bound is valid during a time interval of duration at least tau.

Under the realistic hypothesis that the eavesdropper E holding the quantum state rho_E has no quantum memory, or even has a quantum memory that decoheres in a short time, then a long-term secure communication protocol (quantified by a negligible accessible information available to an eavesdropper) can be transformed into a communication protocol for which composable information-theoretic security holds

A "computationally secure" (CS) system is a secure system assuming that any adversaries are computationally limited, as all adversaries are in practice. Because hardness of a problem is difficult to prove, in practice certain problems are "assumed" to be difficult (computational hardness assumption). A non-exhaustive list of some of common cryptographic hardness assumptions or problems for example comprises integer factorization, the RSA problem (stronger than factorization), the quadratic residuosity problem (stronger than factorization), the decisional composite residuosity assumption (stronger than factorization), the higher residuosity problem (stronger than factorization), the Phi-hiding assumption (stronger than factorization), the discrete log problem (DLP), the computational Diffie-Hellman assumption (CDH; stronger than DLP), the decisional Diffie-Hellman assumption (DDH; stronger than CDH) and the shortest Vector Problem.

In physics, physical information refers generally to the information that is contained in a physical system. Information itself can be defined as "that which can distinguish one thing from another". It can be distinguished between "classical information" and "quantum information".

"Quantum information" specifies the complete quantum state vector (or wave function) of a system. "Classical information" picks out a definite (pure) quantum state if it is already given a prespecified set of distinguishable (orthogonal) quantum states to choose from; such a set constitutes a basis for the vector space of all the possible pure quantum states.

The amount of "classical information in a quantum system" gives the maximum amount of information that can actually be measured and extracted from that quantum system for use by external classical (decoherent) systems, since only basis states are operationally distinguishable from each other. The impossibility of differentiating between non-orthogonal states is a fundamental principle of quantum mechanics.

An amount of "(classical) physical information" can be quantified. For a system S, with N distinguishable states (orthogonal quantum states) that are consistent with its description, the amount of information I(S) contained in the system's state can be said to be log(N) (modulo a multiplicative constant). The logarithm is additive when concatenating independent, unrelated subsystems. If the log is taken base 2, the unit of information is the binary digit or bit.

In physics, in quantum mechanics, a "coherent state" corresponds to an eigenvectors of the harmonic oscillator Hamiltonian. Such states are of high importance, in particular in optics, since a laser (operated well over threshold) typically produces states of light that can be described as coherent states of light.

The step of "encoding" classical information (x) over a quantum state Psi means that a unitary operation Ux (that depends on x) is applied onto the quantum state Psi.

The step of decoding information X encoded on a quantum state rho refers to the step of performing measurements (possible joint measurements) on rho and possibly of performing subsequent classical post-processing on the obtained measurement results in order to build an estimator for X.

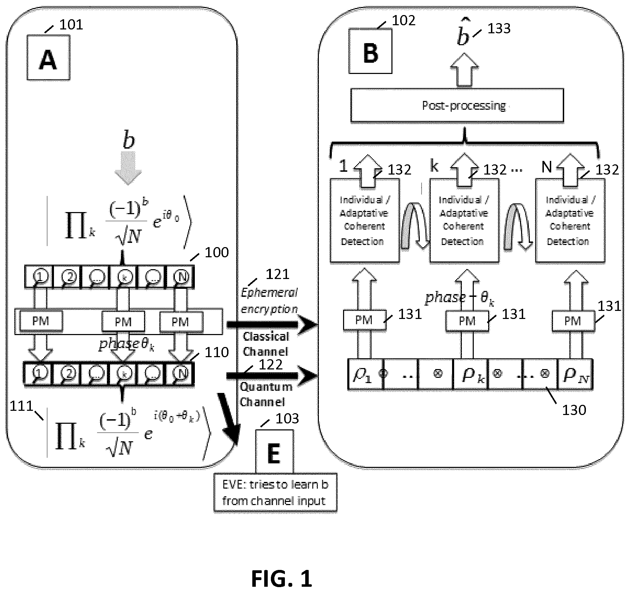

The figure 1 shows examples of steps of an embodiment of the method according to the invention.

Alice (A) 101 and Bob (B) 102 represent two distant parties in communication; Eve (E) 103 represents an eavesdropper (or an attacker or an adverse party). No assumptions are made regarding E, in particular versus her associated computing power and/or mathematical capabilities.

According to an aspect of the invention, a bit of information b is optically encoded on n optical pulses. At the same time, in parallel, simultaneously the phase of each pulse is masked or obfuscated or hidden for example by using an encryption key 100 (which in some embodiments is characterized as being "ephemeral", i.e. which is of a short duration compared to ...), at least such that an attacker cannot get access to said bit (either directly or indirectly through reconstruction). In other words, the key 100 is shared by A and B.

A wants to send a bit of information b to B.
1) As a prerequisite, A (101) and B (102) share a cryptographic key K (100)
2) A and B use said key K (100) to generate a pseudo-random sequence (110) of length m*N.
3) On A and B side, from this sequence is derived or determined a sequence of N phases (101) Theta1....ThetaN with a precision of 2Pi/2^m.
4) A sends or emits (by a quantum channel 122) a sequence of N pulses, (coherent states of same amplitude, each one with phase b*Pi), and each pulse is modulated by said phase mask: Theta_i (i=1...N), leading to the the sequence of N coherent states: |alpha/sqrt(N) exp(i b*Pi+Theta_i) (i=1 ...N);
5) B receives the sequence of N modulated pulses from A (130). B (102) knows the phases (Theta1...ThetaN) because of the knowledge of K. B demodulates the phase mask by apply sequentially the phase modulation (-Theta_i), (i=1...N).
6) B performs (adaptively or non-adaptively) an individual measurement on each of the N pulses (131) and, from the results, estimates the received bit b^.

A and B have an advantage over E: the two distant parties both know angles Theta_i (i=1...N). They thus can demodulate the phase mask at reception and perform a better measurement. In particular, the signal-to-noise ratio (evaluated at B) can vary like N^2).

On the attacker side, E cannot break the pseudo-random sequence in a time shorter than the coherence time associated to quantum memory. In practice, E is forced to perform individual measures (classical physics) of each phase (heterodyne). Even if E would get access to phases (Theta1, ... Theta N), for example later on, the signal-to-noise ratio (evaluated on b) varies like N.

The comparison of the latter (N versus N^2) indicates that the advantage of A&B over E increases as N increases; and there exists (is created) a "gap" between the "accessible information" between A and B and the "accessible information" between A and E. In some embodiments, the "gap" can be further leveraged by varying N and the total mean photon number alpha^2. A and B *do not even* have to estimate or quantify the information intercepted by E, as this quantity can be upper bounded directly, from the protocol parameters.

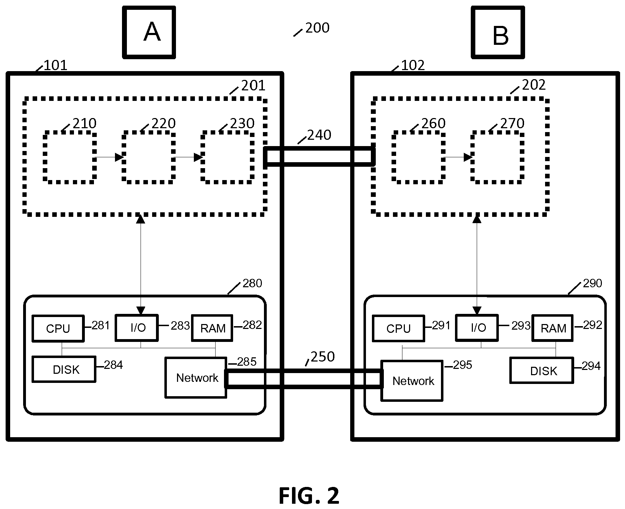

Figure 2 illustrates some aspects of an exemplary system according to the invention.

The figure shows a system 200 interconnecting distant parties A and B. A is associated with opto-electronics components 201 and computing, storage and communication resources 280. B is likewise associated with opto-electronics components 202 and computing, storage and communication resources 290.

Such opto-electronics components for example can comprise a laser (source) 210 at A 101 operated in continuous wave regime; an amplitude modulator 220 placed after the laser, used to modulate the n pulses, each one being a coherent state of amplitude alpha/sqrt(n); a phase modulator 230 placed after the laser, used to modulate phase shifts Theta1, Theta2, ... Thetan and the binary BPSK modulation; at least one optical quantum 240 channel from A 101 to B 102 ; at least one classical channel 250 from A 101 to B 102; a phase modulator 260 at B 102; and a coherent receiver 270 (adaptative or non-adaptive) at B 102.

In general, computing, storage and communication resources 280 at A or computing, storage and communication resources 290 at B can comprise processing means (281, 291) (e.g. one or more CPUs), memory means (282, 292), Input/Output I/O means (283, 293), storage means (284, 294) and network access means (285, 295) said means possibly interacting with one another (caching, swapping, distributed computing, load balancing, etc).

The processing means (281,291) can comprise a CPU (multicore or manycore) or a FPGA or an ASIC, or a combination thereof.

The memory means (282, 292) for example comprise one or more of a flash memory or a random access memory.

The opto-electronic hardware attached to A or B is interacting with the classical computing, storage and communication means (280, 290) via the I/O means (283,293). The I/O means (283, 293) for example can comprise digital-to-analog converters (DAC) or analog-to-digital converters (ADC). A digital-to-analog converter (DAC, D/A, D2A or D-to-A) converts digital data (usually binary) into an analog signal (current, voltage, or electric charge). An analog-to-digital converter (ADC) performs the reverse function.

The storage means (284, 294) can comprise one or more hard drives or SSDs.

Optionally, the computing, storage and communication means 280 or 290 can comprise means enabling a (graphical) user interface i.e. enabling man-machine interactions. For example, the system can further comprise output peripherals like displays and input peripherals like a mouse or a keyboard (which for example can be used to control the communication rate via associated graphical user interfaces).

In some embodiments, other hardware devices also can be used (not shown), for example one or more optical switches, optical multiplexers, optical demultiplexers, optical amplifiers, beam splitters, optical non-linear elements, optical isolators, filters, optical fuses and other devices. The hardware being used can be suitable (or adapted) to handle high speeds (e.g. from megabytes to terabytes per second) and/or high modulation depth (e.g. 10 bits or above).

The networks interconnecting A and B (i.e. authenticated channel 250 and quantum channel 240) can be wired and/or wireless. In some embodiments, such networks are wireless networks (e.g. Wifi and/or satellite). In some embodiments, the networks are wired networks (e.g. optic fiber and/or ADSL, for example over the Internet). Advantageously, wired networks (i.e. a wired link between A and B) present a reliable connection. In some other embodiments, networks interconnecting A and B can comprise both wireless and wired networks (for example, the authenticated channel can be wireless while the quantum channel is performed by optical fiber).

In the example shown on the figure, the hardware resources 280 at A for example can manage the exchange of K with B over the classical channel and can also control - in whole or in part - the optical hardware located at A or associated with it. For example, said computing means can handle the message M and the key K as inputs and use the optical hardware to encode M in a quantum codeword, according to the disclosed embodiments of the communication protocol. In particular, the computing means or resources 280 at B can manage the exchange of K with A over the classical channel and control - in whole or in part - the optical hardware at B. For example, said computing means can handle the received quantum state rho and the key K as inputs and use the optical hardware to perform a (possibly joint) measurement on rho and to compute an estimator of M based on the measurement results.

In an embodiment, A (respectively B) is provided with opto-electronics controlled by FPGA. Advantageously, such an embodiment is compact. In some embodiments, specific ASICs can be used (e.g. mass market production, providing very high speed). Multi-core processors as well as many-core processors can be used.

In some embodiments, the invention is implemented by means of highly integrated photonic chips, for example embedded on small terminals or end devices like smartphones or smart watches.

In an embodiment, the software code executed at A and /or B advantageously can be virtualized (for example to bring further security to end devices).

In an embodiment, if A and B are located at secure locations, biometrics can be used for access control of such locations.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

There is disclosed a new security model in quantum cryptography providing a practical and efficient information-theoretically secure communication from ephemeral encryption
In an embodiment, there is leveraged the existence of perfect ephemeral encryption and of finite-time quantum memory. According to an aspect of the invention, the enabled quantum cryptographic protocols are efficient (in terms of loss and error tolerance) compared to QKD while they would not rely on the manipulation of large entangled states, as in is the case in quantum data locking. There is disclosed a secure communication protocol based on binary modulation encoded on coherent states for which it can be demonstrated that, for some quantum channels (characterized by loss and error model), reliable communication of a classical message M can be performed between A and B, while the accessible information of any eavesdropper can be upper bounded by a quantity arbitrary close to zero. The communication protocol is moreover implementable with current technology, relying on optical coherent communication and on optical encryption of the phase information.

Results on quantum data locking, whose security is based considering the accessible information, illustrates that a relaxation of the composable security criteria that is commonly used in Quantum Key Distribution (QKD) can allow to design new quantum cryptographic protocols for secure communications, with improved performances. The locking capacity of a quantum channel is always larger than its private capacity, while it has recently been proven that quantum data locking schemes could allow to approach the classical capacity of a quantum channel. However, all quantum data locking schemes proposed so far rely on the encoding on some classical information into a large entangled state, a procedure that cannot be easily realized experimentally in the near future. In an embodiment, there is disclosed a security model for secure communication which relies on a public quantum channel and an authenticated classical channel, between Alice and Bob, that assumes (as it is the case if one wants to compose quantum data locking with other information-theoretic primitives) that the eavesdropper E can only store quantum information during a finite time *T*, to technological limits of quantum memory, and that Alice and Bob can use a classical encryption scheme and rely on the *ephemeral security* of this encryption scheme: a message *M* is sent encrypted, no information about the message leaks to any eavesdropper E during a time at least *T*, while the encryption scheme may be fully broken at a time greater than *T* (and *M* become fully known by Eve).

On the one hand, decoherence is a fundamental limitation of quantum memory. While decoherence can in principle be handled by designing and engineering carefully isolated qubits and by using fault-tolerant architectures such as topological codes, the experimental challenges to progress in this direction remain important. It can be considered for *T* an optimistic upper bound on the coherence time for the coherent storage of a few qubits, and could relatively safely work with values of *T* below a threshold.

On the other hand, practical and computationally efficient classical encryption exist, like AES 256. Although such schemes are not information-theoretically secure, it is not known in practice any classical (or quantum) algorithm to break such schemes more efficiently than brute-force. It is thus realistic that an *ephemeral encryption* holds, i.e. that one cannot learn anything about the encrypted message during time shorter than r. Most of the practical QKD demonstrations combine QKD with a classical encryption scheme such as AES, which implicitly assumes that AES security is strong. An ephemeral encryption is a proposal to reverse this vision and directly use a classical computationally secure encryption scheme such as AES to boost the performance or the practicality of a quantum cryptographic secure communication protocol.

In an embodiment, reaching the classical capacity of an optical channel can be done with coherent-state encoding, but this requires to perform joint-measurements at the reception side, for which the optimal receiver is unknown. In an embodiment, in the special case of binary encoded on coherent states, on a pure loss channel, an explicit optimal receiver relying on adaptative individual measurements such as the Dolinar receiver is available.

By extension, regarding multiple coherent state discrimination, a protocol analog to the use of a Dolinar receiver (and relying on splitting the coherent state into "slices") can be considered, except that in addition, in such a development, Alice and Bob can modulate and share secretly (with ephemeral encryption) some phase reference information. In this context, a "gap" between the optimal discrimination probability of Eve and the optimal discrimination probability of Bob (when he relies on a homodyne detection) can be "engineered" (depending on the parameters of the scheme, such as number or "slices" and mean photon number of the coherent state). The existence of this gap, that can later be amplified by coding techniques like the one used in wireless physical layer security (codes for the wire-tap channel), indicates that the framework of the invention can allow to design a protocol for secure communications, with information-theoretic security. This protocol is appealing because in some embodiments it relies solely on the phase modulation of coherent states and homodyne detection, which are now widely used in long-distance classical communications, and can allow to quantum cryptography to make an important step towards practicality.

There is disclosed a (computer-implemented) method of communicating a long-term-secure classical message M between distant parties A and B by sharing a short-term-secure classical key K between A and B and by using a public quantum channel and a classical authenticated channel.

According to an aspect of the invention, there is disclosed an "hybrid" security model (i.e. combining classical cryptography and quantum cryptography in a particular manner). Embodiments of the disclosed invention for example enable to construct secure two-party cryptographic primitives. Such developments comprise for example bit commitment, coin tossing or XOR computing. By extension, such two-party cryptographic protocols can then be used to construct any secure *multi*-party protocols.

In a development, a classical message is long-term-secure if the accessible information of any eavesdropper E about the message can be upper bounded by a quantity which can be chosen arbitrarily close to zero and if said bound remains valid at all time.

In a development, a classical message is short-term-secure during a time duration tau if the accessible information of any eavesdropper E about the message can be upper bounded by a quantity which can be chosen arbitrarily close to zero and if this bound is valid during a time interval of duration at least tau.

In a development, the method comprises the steps of sharing a short-term-secure key K between A and B over the classical authenticated channel; encoding the classical message M at A into a quantum state, using the short-term-secure key K and sending the quantum state to B over the quantum channel; decoding reliably the message M at B, using K and the quantum state received at the output of the quantum channel.

In a development, the short-term secure key K can be renewed regularly. A can use a secure random generator (for example a quantum random number generator) to generate a key stream S and can then transmit S securely to B, using the previously described method, the key stream S. The key stream S can then be used to replace K.

In a development, the step of sharing the short-term-secure key K from A to B relies on or comprises computationally-secure public-key encryption.

In an embodiment, A can encrypt K with the public key of B and can send it to B over the classical authenticated channel. In an embodiment, A and B can initially share a pre-shared long-term-secure key Kseed. A and B both can use a computationally secure symmetric-key encryption algorithm to expand Kseed into K.

In a development, the computationally secure encryption scheme comprises a block and/or stream cipher. In an embodiment, AES 128 is used. In an embodiment AES 256 is used. In some embodiments, algorithms such as Twofish, Serpent, AES (Rijndael), Blowfish, CAST5, RC4, 3DES, Skipjack, Safer+/++ and IDEA can be used (and also combination thereof).

In a development, the step of sharing the short-term-secure key K from A to B comprises a step of distributing a key Kseed with |Kseed|<<|K| with a computationally-secure public-key encryption and a step of expanding Kseed into K with a symmetric-key encryption.

In a development, the step of encoding M into a quantum state at A is performed by encoding M into a product state of size n, communicated via n uses of the quantum channel and wherein the measurements performed at B during the step of decoding are individual or copy-by-copy measurements of each of the n channel outputs.

According to an aspect of the invention, the security from the protocol can be based on the fact that an eavesdropper is limited by a quantum memory of short lifetime, cannot learn the coherent information and is thus limited to the accessible information of the obfuscated state. This accessible information can be upper bounded by a small quantity. On the other hand, B can deobfuscate and measure the successive channel outputs using local operations, possibly adaptatively, and can estimate or determine the information sent by A. In some embodiments, said information can be closed to optimal information.

In a development, the step of encoding the message M at A comprises a step of optically encoding the message M into a product of n quantum coherent states of light, with a total photon number equal to alpha^2.

In a development, the step of encoding at A the message M into a product of n quantum coherent states of light comprises a step of modulating each coherent state at A in phase and/or in amplitude.

In a development, the key K is composed of n*p bits, where p is an integer larger than 1; said short-term-secure key K being used to determine n angles {Theta1, Theta2, ..., Thetan} with a resolution 2Pi/2^p. In a development, the message M is associated with |M| distinct values, with a length in bits equal to k=log₂|M|. In a development, the step of encoding of message M at A into an optical quantum codeword, using the short-term-secure key K comprises the steps of applying a secret sharing scheme S and subsequently an error correcting code C to encode the message M of k bits into a classical codeword c(M) of I bits; encoding optically the classical codeword c(M) of I bits, wherein I=n*m, into a product of n phase-encoded pulses, each being a coherent state of amplitude *alpha*/*sqrt(n)* and of phase chosen from a M-ary phase constellation, encoding m bits; and applying a phase rotation of angle Theta_i (i=1 ...n) to each of the n pulses.

These steps define the encoding of M into an optical quantum codeword of length n, that is an product state of n coherent states, n optical pulses, sent on the quantum channel by making n uses of the channel.

In a development, the step of decoding at B the received optical quantum codeword into an estimate of M, by using the short-term-secure key K comprises the steps of: applying the inverse phase rotations of angle -Theta_i (i=1 ...n) to ith received optical pulse; performing subsequently individual or adaptative coherent measurements on each of the n optical pulses; and determining the message M from the n measurements.

In a development, the method further comprises a step of generating ns shares of the message M considered as an input according to a secret sharing scheme S (t, ns) so that the knowledge of at least t of the ns shares are necessary to recover the message M.

Secret sharing (also called secret splitting) refers to methods for distributing a secret amongst a group of n participants (e.g. A, B, C, D, etc), each of whom is allocated a share of the secret. The secret can be reconstructed only when a sufficient number, of possibly different types, of shares are combined together; individual shares are of no use on their own. Each participant is given a share in such a way that any group of t (for threshold) or more participants can together reconstruct the secret but no group of fewer than t participants can. Such a system is called a (t, n)-threshold scheme. Increasing t will increase the required size of the quantum memory to attack embodiments of the invention, and thus will increase the difficulty of such an attack. In some embodiments, information theoretically-secure secret sharing schemes is used. In some embodiments, computationally secure secret sharing schemes is used. In an embodiment, an homomorphic secret sharing is used. In some embodiemnts, a Blakley's scheme (geometric scheme) and/or a Shamir's scheme (e.g. polynomial interpolation) and/or a Chinese Remainder Theorem (e.g. Mignotte and Asmuth-Bloom) is used. In an embodiment, the secret sharing scheme is proactive. In an embodiment, the secret sharing scheme is verifiable.

It is underlined that secret sharing is a primitive in several protocols for secure multiparty computation.

In a development, the method further comprises a step of using an error correcting code C to encode the message M into a larger message M2.

An error correcting code for example can use redundancy, allowing to recover the message M with the required correctness, even if the channel is noisy. In some embodiments, the parameters of the error correcting code C can be adapted to the quantum channel parameters (e.g. loss and noise). Capacity-reaching and efficiently decodable family of codes, such as LDPC codes or Turbo-codes (e.g. with low decoding complexity), Convolutionnal codes or Polar codes optionally can be used (and combination thereof).

In a development, the length of the message M equals 1 bit; the secret sharing scheme comprises one share; the error correcting code C is a repetition code of length I or n and the M-ary phase encoding is a binary phase encoding.

In an embodiment, k equals 1 i.e. the message M is a bit. A trivial secret scheme means for example that there is one share. The repetition code can be of length I equal to n. A binary-phase encoding means that m equals 1 for a M-ary encoding. For example, a binary phase can be BPSK.

In a development, the computationally secure encryption scheme comprises a block and/or stream cipher.

In a development, the performance of the protocol used to communicate a classical message M of log2|M| (bits) from A to B is associated with 4 parameters (R, n, alpha, epsilon), wherein: n is the number of uses of the quantum channel in one run of the protocol; R is the communication rate at which secure information can be sent from A to B; with R = log2|M| /n; alpha^2 is the mean number of photons sent on the quantum channel in one run of the protocol; epsilon is the correctness of the protocol, wherein the step of decoding at B of the message M is performed with a probability superior than 1-epsilon, while the accessible information to an eavesdropper E about the message M is upper bounded by epsilon.

On the one hand, increasing the mean number of photons alpha^2 will typically increase the amount of information shared with B, but also the information leaked to E. On the other hand, increasing n only decreases the information leaked to E. Therefore, to guarantee a given security level (parameter epsilon), n has to increase when alpha^2 increases. Increasing alpha^2 and n correspondingly allows to increase the distance over which reliable and secure communication (with correctness epsilon) can be performed. These are examples of parameters which can be used to control the communication protocols according to the disclosed methods and systems.

For a fixed quantum channel N_{AB}, characterized by transmission T and a given error model (quantified here by a parameter Xi). The achievable rate R decreases with decreasing T and with increasing error parameter Xi. The achievable rate R decreases with decreasing epsilon. The achievable epsilon decreases with n.

The communication rate can be expressed in bits per channel use, for example. The communication rate (for example of secure bits of message transmitted per second) can be inferior to the rate achievable for phase-modulated classical communication with the same hardware, on the same channel. This can in particular be due to the redundancy (parameter n).

There is disclosed a computer program comprising instructions for carrying out one or more steps of the method when said computer program is executed on a suitable computer device.

There is disclosed a system comprising means adapted to carry out one or more steps of the method.

In a development, the system comprises a laser at A operated in continuous wave regime; an amplitude modulator placed after the laser, to modulate the n pulses, each one being a coherent state of amplitude alpha/sqrt(n); a phase modulator placed after the laser, to modulate phase shifts Theta1, Theta2, ... Thetan and the binary BPSK modulation; at least one optical quantum channel from A to B; at least one classical channel from A to B; a phase modulator at B; a coherent receiver at B (which can be adaptative or non-adaptative); and computing means at A and B.

In an embodiment, the temporal coherence of the laser at A can be high enough to guarantee a stable phase relation over n channel uses. In an embodiment, the coherent receiver at B is adaptative. In an embodiment, the coherent receiver is non-adaptative.

In a development, the discrimination of a multicopy coherent state from a binary modulation comprises adaptative individual measurements.

In a development, the discrimination of a multicopy coherent state from a binary modulation is performed with a Dolinar receiver, consisting of adaptative displacement and photon counting. Such a Dolinar receiver is optimal to discriminate between a binary modulation on coherent states.

In a development, adaptative individual measurements are performed with a Dolinar receiver, or a Bondurant II receiver, or a Becerra receiver, or a Sequential Waveform Nulling receiver or a combination thereof.

In a development, the discrimination of a multicopy coherent state from a binary modulation comprises non-adaptative individual measurements.

In a development, non-adaptative individual measurements are performed with an homodyne receiver, or a heterodyne receiver, or a Kennedy receiver, or a Bondurant I receiver or a combination thereof.

Further embodiments are now described.

A "reference frame" or "referential" comprises information of a physical nature which cannot be entirely communicated by or via digital information (by contrast a "key" can be communicated by digital information).

A "private reference frame" is a reference frame which is private "private" (or at least partially private). The term "private" underlines that the reference frame is "not widely known" or "not publicly disclosed". In other words, at least two parties (for example authorized parties) do know said reference frame. By design, Eve does not know the reference frame.

The existence of a "private reference frame" between A and B is enabled by two facts. A first fact is that the security of the encryption according to the invention can be considered as "ephemeral" (is "of finite duration in time"). In other words: long after the communication, an attacker may be able to decipher or break the encryption (but this does not matter...). It is underlined that the communication between A and B is not necessarily "ephemeral". A second fact is that quantum memories present limited decoherence durations, because of technological limitations. The combination of these two facts enables the sharing of a "private reference frame". Distant parties A and B advantageously share said "private reference frame": they can optimally decode the quantic communication while an attacker cannot.

In an embodiment, the "reference frame" is "obfuscated" (or hided or obscured or protected). In other words, the considered object is protected from identification or extraction if and when it is under the control of an adversary. In a particular embodiment, obfuscation comprises encryption. In computer security, obfuscation can refer to methods used to obscure an attack payload from inspection.

The action of "obfuscating" a shared reference frame (shared by authorized parties A and B, with a precision better than p_authorized) consists in measures (M) taken so that only A and B are capable on agreeing on the shared reference frame (with a precision better that p_authorized) while any unauthorized party is not able to obtain enough information to guess the reference frame with precision better than p_unautorized). The type of acceptable measures M can vary. It can for example consist in encrypting part of the information exchanged between A and B, while agreeing on the shared reference frame. It may also consist in guaranteeing to A and B only a privileged access to an external reference, etc.

The step of "distilling" a key refers to error correction and privacy amplication. Privacy amplification is the art of distilling highly secret shared information such as a secret key, from a larger body of shared information that is only partially secret.

A cryptosystem is "information-theoretically secure" (ITS) if it can provide confidentiality expressed in an information-theoretic sense, allowing to operationally bound the information leaking to non-authorized party. An "information-theoretically secure" communication cannot be broken even when the adversary has unlimited computing power. The security of an ITS encryption protocol will in particularly hold even if unproven assumptions about computational hardness are challenged in the future. The security of such algorithm is also not vulnerable to future developments in computer power such as quantum computing. The "one-time pad" introduced by Shannon is a common example of a cryptographic protocol presenting information theoretic security.

The disclosed method (e.g. protocol) according to the disclosed invention in particular allows efficiently locking of classical information. This specific locking is characterized by (i) a rate far beyond the private capacity and, at the same time, (ii) without resorting to the use of large entangled state at the input. Regarding (i), the security of quantum data locking is generally based considering the accessible information. The locking capacity of a quantum channel is always larger than its private capacity. Quantum data locking schemes can allow approaching the classical capacity of a quantum channel. Regarding (ii), known quantum data locking schemes proposed so far rely on the encoding on some classical information into a large entangled state, a procedure that cannot be easily realized experimentally, at least in the near future. Embodiments of the invention do not require resorting to the use of large entangled state at the input.

In an embodiment, there is disclosed an ephemeral standard encryption scheme between A and B attacked by a finite-time quantum memory of E. A/Any quantum memory is bound to decohere in a finite time. Surprisingly, if appropriately leveraged or exploited, this limitation of a finite time can open up new opportunities. In particular, during such a finite duration of decoherence, a data encryption reasonably can hold. More precisely, an encryption which can be considered as perfect can occur. The expression "perfect" refers to the interpretation of term as generally used in information-theoretic security: an encryption algorithm is perfectly secure if a cipher-text produced using it provides no information about the plain-text without knowledge of the key. The consideration of such a combination further enables a new quantum cryptographic protocol.

In an embodiment, there is disclosed a security model for secure communication comprising a public quantum channel and an authenticated classical channel, between Alice and Bob, wherein: a) Eve can only store quantum information during a finite time T, to the technological limits of quantum memory ; and b) Alice and Bob can use a classical encryption scheme and rely on the ephemeral security of this encryption scheme: a message M is sent encrypted, no information about the message leaks to any eavesdropper E during a time at least T, while the encryption scheme may be fully broken at a time greater than T (and M become fully known by Eve). One could consider for T an optimistic upper bound on the coherence time for the coherent storage of a few qubits, and could relatively safely work with values of T below a s. During time shorter than T: one cannot learn anything about the encrypted message.

There is disclosed a method of handling communications between distant parties A and B, comprising the steps of sharing a private reference frame with an authenticated channel and the further step of using said private reference frame to perform private information-theoretically secure (ITS) communications with a quantum channel.

There is disclosed a method of establishing a secret classical communication channel between distant parties A and B, comprising the steps of sharing a private reference frame between A and B; obfuscating said private reference frame in a computational secure manner; encoding at A classical information over quantum states; decoding at B said classical information by using the (unobfuscated) reference frame; and distilling a secret information from the obtained correlations in a information-theoretically secure manner.

In a development, the reference frame cannot be deobfuscated (by E) before the end of the decoherence time of a quantum memory.

In a development, the step of obfuscating the reference frame in a computationally secure manner uses/is performed by using a computationally secure encryption scheme. This encryption enables to share secret information between A and B that will remain secret against an eavesdropper during a time longer that the decoherence time of any quantum memory.

In a development, the encryption is considered secure if the decryption cannot occur before the end of the decoherence time of a quantum memory. AES encryption can be used.

In a development, the reference frame shared by A and B comprises a phase reference frame, said phase reference frame being used to perform coherent optical communications between A and B.

In a development, the step of encoding at A classical information over quantum states further comprises the step of sending binary information from A to B by using phase modulated coherent states and the step of decoding at B said classical information by using the (unobfuscated) reference frame further comprises the step of performing at B coherent detection. The knowledge of a shared reference frame allows B to perform adaptative measurements and to decode the binary information sent by A at a rate which is larger than the rate attainable by an eavesdropper having access to only an obfuscated version of the reference frame.

In a development, the method further comprises the steps of A and B generating a pseudo-random sequence of length m*N from a pre-shared cryptographic key K, said key being obtained from a computationally secure encryption scheme; determining a sequence of N phases Theta1...ThetaN defined with m bits of precision; encoding at A a bit b over optical coherent states with a total mean photon number of alpha^2, with a BPSK modulation (phase b*Pi: 0 if b=0 or Pi if b=1); emitting at A a sequence of N coherent pulses, said pulses having a same amplitude (alpha / sqrt(N)) and a same phase (b *Pi); modulating at A the phase of each of the N pulses according to the sequence of phases Theta1...ThetaN; receiving at B the N modulated pulses; demodulating at B the phase reference by applying the phase sequence -Theta1...-ThetaN; adaptively or non-adaptively measuring each of the N pulses and estimate the received bit.

In a development, the method further comprises a step of subsequent post-processing comprising ECC or FCC. In a development, the modulation performed on the pulse phases is a binary modulation or a Gaussian modulation. In a development, the modulation performed on the pulse phases comprises phase-shift keying modulation.

Different categories of attacks can be (tentitatively) performed against some embodiments of the invention. It is possible to use known countermeasures to said known attacks, in combination with embodiments of the invention. For example, a physical implementation of the invention may suffer from covert channels and/or side-channel attacks (active or passive) which may be mounted (for example Trojan Horse attacks or attacks) on the detection at Bob side; corresponding countermeasures can be applied and combined with the disclosed embodiments of the invention. For example, known techniques comprise the use of optimal isolators, filters, optical fuses and other devices putting constraints on the passively or actively induced optical leakage. An optical watch-dog, monitoring incoming light (at A or at B or at both sides) for example can be used to counter Trojan horse attacks as well as blinding attacks on the detectors. Man-in-the-middle attacks also can be tentitatively performed (for example if authentication gets broken or is absent); known techniques can be applied/combined with embodiments of the invention.

## Claims

1. Method of communicating a long-term-secure classical message M between distant parties A and B by sharing a short-term-secure classical key K between A and B and by using a public quantum channel and a classical authenticated channel;
**characterized in that** it further comprises the steps of:
- sharing a short-term-secure key K between A and B over the classical authenticated channel;
- encoding the classical message M at A into a quantum state, using the short-term-secure key K and sending the quantum state to B over the quantum channel;
- decoding reliably the message M at B, using K and the quantum state received at the output of the quantum channel;
wherein the step of encoding the message M at A comprises a step of optically encoding the message M into a product of n quantum coherent states of light, with a total photon number equal to alpha^2;
wherein the step of encoding at A the message M into a product of n quantum coherent states of light comprises a step of modulating each coherent state at A in phase and/or in amplitude.

2. The method of Claim 1, wherein a classical message is long-term-secure if the accessible information of any eavesdropper E about the message can be upper bounded by a quantity which can be chosen arbitrarily close to zero and if said bound remains valid at all time; and wherein a classical message is short-term-secure during a time duration tau if the accessible information of any eavesdropper E about the message can be upper bounded by a quantity which can be chosen arbitrarily close to zero and if this bound is valid during a time interval of duration at least tau.

3. The method of Claim 2 wherein the step of sharing the short-term-secure key K from A to B comprises computationally-secure public-key encryption.

4. The method of Claim 2 or 3, wherein the step of sharing the short-term-secure key K from A to B comprises a step of distributing a key Kseed with |Kseed|<<|K| with a computationally-secure public-key encryption and a step of expanding Kseed into K with a symmetric-key encryption.

5. The method of Claims 2 to 4, wherein the step of encoding M into a quantum state at A is performed by encoding M into a product state of size n, communicated via n uses of the quantum channel and wherein the measurements performed at B during the step of decoding are individual or copy-by-copy measurements of each of the n channel outputs.

6. The method of Claim 1 wherein:
- the key K is composed of n*p bits, where p is an integer larger than 1; said short-term-secure key K being used to determine n angles {Theta1, Theta2, ..., Thetan} with a resolution 2Pi/2^p;
- the message M is associated with |M| distinct values, with a length in bits equal to k=log₂|M|;
wherein the step of encoding of message M at A into an optical quantum codeword, using the short-term-secure key K comprises the steps of :
- applying a secret sharing scheme S and subsequently an error correcting code C to encode the message M of k bits into a classical codeword c(M) of I bits;
- encoding optically the classical codeword c(M) of I bits, wherein I=n*m, into a product of n phase-encoded pulses, each being a coherent state of amplitude *alpha*/*sqrt(n)* and of phase chosen from a M-ary phase constellation, encoding m bits;
- applying a phase rotation of angle Theta_i (i=1...n) to each of the n pulses.

7. The method of Claim 6 further comprising the step of decoding at B the received optical quantum codeword into an estimate of M, by using the short-term-secure key K comprises the steps of:
- applying the inverse phase rotations of angle -Theta_i (i=1...n) to ith received optical pulse;
- performing subsequently individual or adaptative coherent measurements on each of the n optical pulses;
- determining the message M from the n measurements.

8. The method of any preceding Claim, further comprising a step of generating ns shares of the message M considered as an input according to a secret sharing scheme S (t, ns) so that the knowledge of at least t of the ns shares are necessary to recover the message M.

9. The method of any preceding Claim, further comprising the step of using an error correcting code C to encode the message M into a larger message M2.

10. The method of claim 9, wherein the length of the message M equals 1 bit, wherein the secret sharing scheme comprises one share, wherein the error correcting code C is a repetition code of length l or n and wherein the M-ary phase encoding is a binary phase encoding.

11. The method of claim 3, wherein the computationally secure encryption scheme comprises a block and/or stream cipher.

12. The method of any preceding claim, wherein the performance of the protocol used to communicate a classical message M of k= log2|M| (bits) from A to B is associated with 4 parameters (R, n, alpha, epsilon), wherein:
- n is the number of uses of the quantum channel in one run of the protocol;
- R is the communication rate at which secure information can be sent from A to B; with R = log2|M|/n
- alpha^2 is the mean number of photons sent on the quantum channel in one run of the protocol;
- epsilon is the correctness of the protocol, wherein the step of decoding at B of the message M is performed with a probability superior than 1-epsilon, while the accessible information to an eavesdropper E about the message M is upper bounded by epsilon.

13. A system to communicate a long-term-secure classical message M between distant parties A and B according to the method of claim 1 comprising:
- a laser at A operated in continuous wave regime;
- a amplitude modulator placed after the laser, to modulate the n pulses, each one being a coherent state of amplitude alpha/sqrt(n);
- a phase modulator placed after the laser, to modulate phase shifts {Theta1, Theta2, ... Thetan} and the binary BPSK modulation;
- at least one optical quantum channel from A to B;
- at least one authenticated classical channel from A to B;
- a phase modulator at B;
- a coherent receiver at B;
- computing means at A and B.

14. The system of Claim 14, wherein the coherent measurements at B are adaptative individual measurements.

15. The system of Claim 15, wherein adaptative individual measurements are performed with a Dolinar receiver, or a Bondurant II receiver, or a Becerra receiver, or a Sequential Waveform Nulling receiver or a combination thereof.

16. The system of Claims 15 or 16, wherein the coherent measurements performed at B are non-adaptative individual measurements.

17. The system of Claim17, wherein non-adaptative individual measurements are performed with a homodyne receiver, or a heterodyne receiver, or a Kennedy receiver, or a Bondurant I receiver or a combination thereof.

## Patentansprüche

1. Verfahren zum Kommunizieren einer langzeitsicheren klassischen Nachricht M zwischen entfernten Parteien A und B durch Teilen eines kurzzeitsicheren klassischen Schlüssels K zwischen A und B und durch Verwenden eines öffentlichen Quantenkanals und eines klassischen authentifizierten Kanals;
**dadurch gekennzeichnet, dass** es ferner die Schritte umfasst:
- Teilen eines kurzzeitsicheren Schlüssels K zwischen A und B über den klassischen authentifizierten Kanal;
- Codieren der klassischen Nachricht M bei A in einen Quantenzustand unter Verwendung des kurzzeitsicheren Schlüssels K und Senden des Quantenzustands zu B über den Quantenkanal;
- verlässliches Decodieren der Nachricht M bei B unter Verwendung von K und des Quantenzustands, der am Ausgang des Quantenkanals empfangen wird;
wobei der Schritt des Codierens der Nachricht M bei A einen Schritt des optischen Codierens der Nachricht M in ein Produkt von n quantenkohärenten Zuständen von Licht mit einer Gesamtphotonenanzahl gleich alpha^2 umfasst;
wobei der Schritt des Codierens der Nachricht M bei A in ein Produkt von n quantenkohärenten Zuständen von Licht einen Schritt des Modulierens jedes kohärenten Zustands bei A in Phase und/oder in Amplitude umfasst.

2. Verfahren nach Anspruch 1, wobei eine klassische Nachricht langzeitsicher ist, wenn die zugänglichen Informationen von einem Lauscher E über die Nachricht durch eine Menge nach oben begrenzt werden kann, die beliebig nahe Null gewählt werden kann, und wenn die Grenze zu jeder Zeit gültig bleibt; und wobei eine klassische Nachricht während einer Zeitdauer tau kurzzeitsicher ist, wenn die zugänglichen Informationen eines Lauschers E über die Nachricht durch eine Menge nach oben begrenzt werden kann, die beliebig nahe Null gewählt werden kann, und wenn diese Grenze während eines Zeitintervalls einer Dauer von mindestens tau gültig ist.

3. Verfahren nach Anspruch 2, wobei der Schritt des Teilens des kurzzeitsicheren Schlüssels K von A zu B eine rechensichere Verschlüsselung mit öffentlichem Schlüssel umfasst.

4. Verfahren nach Anspruch 2 oder 3, wobei der Schritt des Teilens des kurzzeitsicheren Schlüssels K von A zu B einen Schritt eines Verteilens eines Schlüssels Kseed mit |Kseed| << |K| mit einer rechensicheren Verschlüsselung mit öffentlichem Schlüssel und einen Schritt eines Erweiterns von Kseed in K mit einer Verschlüsselung mit symmetrischem Schlüssel umfasst.

5. Verfahren nach Anspruch 2 bis 4, wobei der Schritt des Codierens von M in einen Quantenzustand bei A durch Codieren von M in einen Produktzustand der Größe n, kommuniziert über n Verwendungen des Quantenkanals, durchgeführt wird und wobei die während des Schritts des Decodierens bei B durchgeführten Messungen individuelle oder Messungen von Kopie für Kopie von jedem der n Kanalausgänge sind.

6. Verfahren nach Anspruch 1, wobei:
- der Schlüssel K zusammengesetzt ist aus n^{∗}p Bits, wobei p eine ganze Zahl größer als 1 ist; der kurzzeitsichere Schlüssel K verwendet wird, um n Winkel {Theta1, Theta2, ., Thetan} mit einer Auflösung von 2Pi/2^p zu bestimmen;
- die Nachricht M ist mit |M| eindeutigen Werten assoziiert ist, wobei eine Länge in Bits gleich k = log₂|M| ist;
wobei der Schritt des Codierens der Nachricht M bei A in ein optisches Quantencodewort unter Verwendung des kurzzeitsicheren Schlüssels K die Schritte umfasst:
- Anwenden eines Geheimnisteilschemas S und anschließend eines Fehlerkorrekturcodes C, um die Nachricht M von k Bits in ein klassisches Codewort c(M) von I Bits zu codieren;
- optisches Codieren des klassischen Codeworts c(M) von I Bit, wobei I = n^{∗}m, in ein Produkt von n phasencodierten Impulsen, wobei jeder ein kohärenter Zustand der Amplitude *alpha*/*Quadratwurzel (n)* ist und der Phase ausgewählt aus einer M-stufigen Phasenkonstellation ist, die m Bits codiert;
- Anwenden einer Phasendrehung des Winkels Theta_i (i = 1...n) auf jeden der n Impulse.

7. Verfahren nach Anspruch 6, ferner umfassend, dass der Schritt des Decodierens bei B des empfangenen optischen Quantencodeworts in einen Schätzwert von M unter Verwendung des kurzzeitsicheren Schlüssels K die Schritte umfasst:
- Anwenden der inversen Phasendrehungen des Winkels -Theta_i (i = 1...n) auf den i-ten empfangenen optischen Impuls;
- nachfolgend Durchführen individueller oder adaptiver kohärenter Messungen an jedem der n optischen Impulse;
- Bestimmen der Nachricht M aus den n Messungen.

8. Verfahren nach einem der vorhergehenden Ansprüche, ferner umfassend einen Schritt des Erzeugens von ns Teilen der Nachricht M, die als eine Eingabe gemäß einem Geheimteilschema S (t, ns) betrachtet werden, so dass die Kenntnis von mindestens t der ns Teile notwendig ist, um die Nachricht M wiederherzustellen.

9. Verfahren nach einem der vorhergehenden Ansprüche, ferner umfassend den Schritt des Verwendens eines Fehlerkorrekturcodes C, um die Nachricht M in eine größere Nachricht M2 zu codieren.

10. Verfahren nach Anspruch 9, wobei die Länge der Nachricht M gleich 1 Bit ist, wobei das Geheimnisteilschema einen Teil umfasst, wobei der Fehlerkorrekturcode C ein Wiederholungscode der Länge I oder n ist und wobei die M-stufige Phasencodierung eine binäre Phasencodierung ist.

11. Verfahren nach Anspruch 3, wobei das rechensichere Verschlüsselungsschema eine Block- und/oder Bitstrom-Chiffre umfasst.

12. Verfahren nach einem der vorhergehenden Ansprüche, wobei die Durchführung des Protokolls, das verwendet wird, um eine klassische Nachricht M von k = log2|M| (Bit) von A zu B zu kommunizieren, 4 Parametern (R, n, alpha, epsilon) assoziiert ist, wobei:
- n die Anzahl von Verwendungen des Quantenkanals in einem einzelnen Durchlauf des Protokolls ist;
- R die Kommunikationsrate ist, mit der sichere Informationen von A zu B gesendet werden können; mit R = log2|M| /n
- alpha^2 die mittlere Anzahl von Photonen ist, die auf dem Quantenkanal in einem einzelnen Durchlauf des Protokolls gesendet werden;
- epsilon die Korrektheit des Protokolls ist, wobei der Schritt des Decodierens der Nachricht M bei B mit einer Wahrscheinlichkeit besser als 1-epsilon durchgeführt wird, während die zugänglichen Informationen für einen Lauscher E über die Nachricht M durch epsilon nach oben begrenzt ist.

13. System zum Kommunizieren einer langzeitsicheren klassischen Nachricht M zwischen entfernten Parteien A und B gemäß dem Verfahren von Anspruch 1, umfassend:
- einen Laser bei A, der im Dauerstrichbetriebszustand betrieben wird;
- einen Amplitudenmodulator, der nach dem Laser platziert ist, um die n Impulse zu modulieren, von denen jeder ein kohärenter Amplitudenzustand alpha/Quadratwurzel(n) ist;
- einen Phasenmodulator, der nach dem Laser platziert ist, um Phasenverschiebungen {Theta1, Theta2, ... Thetan} und die binäre BPSK-Modulation, zu modulieren;
- mindestens einen optischen Quantenkanal von A zu B;
- mindestens einen authentifizierten klassischen Kanal von A zu B;
- einen Phasenmodulator bei B;
- einen kohärenten Empfänger bei B;
- Rechenmittel bei A und B.

14. System nach Anspruch 13, wobei die kohärenten Messungen bei B adaptive individuelle Messungen sind.

15. System nach Anspruch 14, wobei adaptive individuelle Messungen mit einem Dolinar-Empfänger oder einem Bondurant-II-Empfänger oder einem Becerra-Empfänger oder einem sequentiellen Wellenform-Nullabgleich-Empfänger oder einer Kombination davon durchgeführt werden.

16. System nach Anspruch 14 oder 15, wobei die kohärenten Messungen, die bei B durchgeführt werden, nicht-adaptive individuelle Messungen sind.

17. System nach Anspruch 16, wobei nicht-adaptive individuelle Messungen mit einem Homodynempfänger oder einem Heterodynempfänger oder einem Kennedy-Empfänger oder einem Bondurant-I-Empfänger oder einer Kombination davon durchgeführt werden.

## Revendications

1. Procédé de communication d'un message classique sécurisé à long terme M entre des parties distantes A et B, en partageant une clé classique sécurisée à court terme K entre A et B et en utilisant un canal quantique public et un canal authentifié classique ;
**caractérisé en ce qu'**il comprend en outre les étapes ci-dessous consistant à :
- partager une clé sécurisée à court terme K entre A et B sur le canal authentifié classique ;
- coder le message classique M au niveau de A dans un état quantique, en utilisant la clé sécurisée à court terme K et envoyer l'état quantique à B sur le canal quantique ;
- décoder de manière fiable le message M au niveau de B, en utilisant K et l'état quantique reçu à la sortie du canal quantique ;
dans lequel l'étape de codage du message M au niveau de A comprend une étape de codage optique du message M en un produit de n états cohérents quantiques de la lumière, avec un nombre total de photons égal à alpha^2 ;
dans lequel l'étape de codage, au niveau de A, du message M, en un produit de n états cohérents quantiques de la lumière comprend une étape de modulation de chaque état cohérent, au niveau de A, en phase et/ou en amplitude.

2. Procédé selon la revendication 1, dans lequel un message classique est sécurisé à long terme si les informations accessibles par tout attaquant E concernant le message peuvent être limitées supérieurement par une quantité qui peut être choisie arbitrairement proche de zéro, et si ladite limite reste valide à tout moment ; et dans lequel un message classique est sécurisé à court terme pendant une durée tau si les informations accessibles par tout attaquant E concernant le message peuvent être limitées supérieurement par une quantité qui peut être choisie arbitrairement proche de zéro et si cette limite est valable pendant un intervalle de temps d'une durée au moins égale à la durée tau.

3. Procédé selon la revendication 2, dans lequel l'étape de partage de la clé sécurisée à court terme K de A à B comprend un chiffrement par clé publique dont la sécurité est computationnelle.

4. Procédé selon la revendication 2 ou 3, dans lequel l'étape de partage de la clé sécurisée à court terme K de A à B comprend une étape de distribution d'une clé Kseed, où |Kseed|<<|K|, avec un chiffrement par clé publique dont la sécurité est computationnelle, et une étape d'expansion de Kseed en K avec un chiffrement par clé symétrique.

5. Procédé selon les revendications 2 à 4, dans lequel l'étape de codage de M en un état quantique au niveau de A est mise en oeuvre en codant M en un état de produit de taille n, communiqué par l'intermédiaire de n utilisations du canal quantique, et dans lequel les mesures mises en oeuvre au niveau de B au cours de l'étape de décodage sont des mesures individuelles ou de type copie par copie de chacune des n sorties de canal.

6. Procédé selon la revendication 1, dans lequel :
- la clé K est composée de n^{∗}p bits, où p est un nombre entier supérieur à 1 ; ladite clé sécurisée à court terme K étant utilisée en vue de déterminer n angles {Theta1, Theta2, ..., Thetan} avec une résolution de 2Pi/2^p ;
- le message M est associé à |M| valeurs distinctes, avec une longueur en bits égale à k=log₂|M| ;
dans lequel l'étape de codage du message M au niveau de A en un mot codé quantique optique, en utilisant la clé sécurisée à court terme K, comprend les étapes ci-dessous consistant à :
- appliquer un schéma de partage de secret S et subséquemment un code correcteur d'erreurs C en vue de coder le message M de k bits en un mot codé classique c(M) de I bits ;
- coder optiquement le mot codé classique c(M) de I bits, dans lequel I=n^{∗}m, en un produit de n impulsions codées en phase, chacune étant un état cohérent d'amplitude *alpha*/*sqrt(n)*, et de phase choisie parmi une constellation de phase à M états de phase, codant m bits ;
- appliquer une rotation de phase d'angle Theta_i (i=1 ... n) à chacune des n impulsions.

7. Procédé selon la revendication 6, comprenant en outre l'étape de décodage, au niveau de B, du mot codé quantique optique reçu, en une estimation de M, en utilisant la clé sécurisée à court terme K, comprenant les étapes ci-dessous consistant à :
- appliquer les rotations de phase inverses d'angle -Theta_i (i=1 ... n) à la i-ème impulsion optique reçue ;
- mettre subséquemment en oeuvre des mesures cohérentes individuelles ou adaptatives sur chacune des n impulsions optiques ;
- déterminer le message M à partir des n mesures.

8. Procédé selon l'une quelconque des revendications précédentes, comprenant en outre une étape consistant à générer des parts ns du message M considéré comme une entrée selon un schéma de partage de secret S (t, ns) de sorte que la connaissance d'au moins t des parts ns est nécessaire pour récupérer le message M.

9. Procédé selon l'une quelconque des revendications précédentes, comprenant en outre l'étape consistant à utiliser un code correcteur d'erreurs C en vue de coder le message M en un message M2 plus grand.

10. Procédé selon la revendication 9, dans lequel la longueur du message M est égale à 1 bit, dans lequel le schéma de partage de secret comprend une part, dans lequel le code correcteur d'erreurs C est un code de répétition de longueur I ou n, et dans lequel le codage de phase à M états de phase est un codage de phase binaire.

11. Procédé selon la revendication 3, dans lequel le schéma de chiffrement sécurisé par calcul informatique comprend un chiffre par bloc et/ou par flux.

12. Procédé selon l'une quelconque des revendications précédentes, dans lequel la performance du protocole utilisé pour communiquer un message classique M de k= log2|M| (bits) de A à B est associée à 4 paramètres (R, n, alpha, epsilon), dans lequel :
- n est le nombre d'utilisations du canal quantique au cours d'un cycle unique du protocole ;
- R est la vitesse de communication à laquelle des informations sécurisées peuvent être envoyées de A à B, où R = log2|M|/n
- alpha^2 est le nombre moyen de photons envoyés sur le canal quantique au cours d'un cycle unique du protocole ;
- epsilon est l'exactitude du protocole, dans lequel l'étape de décodage, au niveau de B, du message M, est mise en oeuvre avec une probabilité supérieure à 1-epsilon, tandis que les informations accessibles à une écoute clandestine E concernant le message M sont limitées supérieurement par epsilon.

13. Système destiné à communiquer un message classique sécurisé à long terme M entre des parties distantes A et B conformément au procédé selon la revendication 1, comprenant :
- un laser au niveau de A fonctionnant en régime d'onde continue ;
- un modulateur d'amplitude placé après le laser, pour moduler les n impulsions, chacune étant un état cohérent d'amplitude *alpha*/*sqrt(n)* ;
- un modulateur de phase placé après le laser, pour moduler des déphasages {Theta1, Theta2, ..., Thetan} et la modulation BPSK binaire ;
- au moins un canal quantique optique de A à B ;
- au moins un canal classique authentifié de A à B ;
- un modulateur de phase au niveau de B ;
- un récepteur cohérent au niveau de B ;
- un moyen de calcul au niveau de A et de B.

14. Système selon la revendication 13, dans lequel les mesures cohérentes au niveau de B sont des mesures individuelles adaptatives.

15. Système selon la revendication 14, dans lequel des mesures individuelles adaptatives sont mises en oeuvre au moyen d'un récepteur Dolinar, ou d'un récepteur Bondurant II, ou d'un récepteur Becerra, ou d'un récepteur d'annulation de forme d'onde séquentielle ou d'une combinaison de ceux-ci.

16. Système selon la revendication 14 ou 15, dans lequel les mesures cohérentes mises en oeuvre au niveau de B sont des mesures individuelles non adaptatives.

17. Système selon la revendication 16, dans lequel des mesures individuelles non adaptatives sont mises en oeuvre au moyen d'un récepteur homodyne, ou d'un récepteur hétérodyne, ou d'un récepteur Kennedy, ou d'un récepteur Bondurant I, ou d'une combinaison de ceux-ci.
